# EUROPÄISCHE PATENTSCHRIFT

(11) **EP 1 309 803 B1**
(45) Veröffentlichungstag und Bekanntmachung des Hinweises auf die Patenterteilung: **11.01.2006**
(21) Anmeldenummer: 01957925.9
(22) Anmeldetag: 06.07.2001
(51) Int. Cl.: F15B 15/28

(54) **LINEARANTRIEB**
LINEAR DRIVE
ENTRAINEMENT LINEAIRE

(30) Priorität: 19.08.2000 DE 20014353 U
(43) Veröffentlichungstag der Anmeldung: 14.05.2003
(73) Patentinhaber: Festo Ag & Co., 73734 Esslingen (DE)
(72) Erfinder: HIRLING, Ullrich, 73770 Denkendorf (DE)
(74) Vertreter: Abel, Martin
(86) Internationale Anmeldenummer: PCT/EP2001/007745
(87) Internationale Veröffentlichungsnummer: WO 2002/016782

(56) Entgegenhaltungen:
- DE-U- 20 106 298
- US-A- 4 726 282
- US-A- 4 755 636

## Beschreibung

Die Erfindung betrifft einen Linearantrieb, mit einem Gehäuse, das einen einen Aufnahmeraum für ein linear bewegbares Antriebsteil enthaltenden Rohrkörper und einen an einer Stirnseite des Rohrkörpers angesetzten Gehäusedeckel aufweist, mit einem in der Wandung des Rohrkörpers ausgebildeten, umfangsseitig geschlossenen Hohlraum, der zu der dem Gehäusedeckel zugewandten Stirnfläche des Rohrkörpers offen ist, und mit mindestens einer in axialer Verlängerung des Hohlraumes am Gehäusedeckel vorgesehenen Aufnahme für den rückwärtigen Endabschnitt eines zur Erfassung mindestens einer Position des Antriebsteils dienenden Sensors, der sich aufgehend von der Aufnahme in den Hohlraum des Rohrkörpers hinein erstreckt.

Ein Linearantrieb dieser Art geht aus der DE 43 06 539 C2 hervor. In diesem bekannten Falle verfügt der Rohrkörper über einen in seiner Wandung ausgebildeten kanalartigen Hohlraum, der mit einer als Aufnahmebohrung ausgeführten Aufnahme des stirnseitig angesetzten Gehäusedeckels fluchtet. Der Sensor ist stabförmig ausgebildet und von der Rückseite des Gehäusedeckels her durch die Aufnahmebohrung hindurch in den Hohlraum des Rohrkörpers eingesteckt, wobei der rückwärtige Endabschnitt des Sensors in der Aufnahmebohrung fixiert ist. Am rückwärtigen Endabschnitt des Sensors vorgesehene elektrische Anschlussmittel sind der dem Rohrkörper entgegengesetzten Rückseite des Gehäusedeckels zugeordnet und ermöglichen von dort aus eine elektrische Kontaktierung des Sensors.

Im Falle des bekannten Linearantriebes beanspruchen die zur Fixierung des Sensors am Gehäusedeckel vorgesehenen Maßnahmen relativ viel Platz in der Längsrichtung des Linearantriebes. Dieser verfügt daher über eine relativ große Baulänge. Es ist daher die Aufgabe der vorliegenden Erfindung, einen Linearantrieb zu schaffen, der bei sicherer Fixierung des Sensors kompakte Längenabmessungen ermöglicht.

Zur Lösung dieser Aufgabe ist vorgesehen, dass die Aufnahme von einer Aussparung des Gehäusedeckels gebildet ist, deren Aussparungsöffnung sich ausgehend von der dem Rohrkörper zugewandten Stirnfläche des Gehäusedeckels durchgehend bis zur benachbarten seitlichen Außenfläche des Gehäusedeckels erstreckt, wobei die elektrischen Anschlussmittel des Sensors dem seitlichen Öffnungsabschnitt der Aussparungsöffnung zugeordnet sind.

Auf diese Weise sitzt der rückwärtige Endabschnitt des Sensors in einer praktisch über Eck gehenden Aussparung des Gehäusedeckels ein, wobei die elektrische Kontaktierung des Sensors von der Seite des Gehäusedeckels her erfolgen kann. Die in Längsrichtung des Linearantriebes gemessene Länge der Aussparung kann relativ kurz gehalten werden, was kurze Abmessungen des Gehäusedeckels ermöglicht und innerhalb des Gehäusedeckels Platz schafft für sonstige Maßnahmen, die für den Betrieb des Linearantriebes erforderlich sind. Da die elektrischen Anschlussmittel des Sensors dem seitlichen Öffnungsabschnitt der Aussparungsöffnung zugeordnet sind, ist überdies eine gute Zugänglichkeit gegeben. Schließlich kann man auch eine verliersichere Fixierung des Sensors erreichen, indem eine Deinstallation nur durch Abnahme des Gehäusedeckels möglich ist, was unbefugten Zugriffen vorbeugt.

Vorteilhafte Weiterbildungen der Erfindung gehen aus den Unteransprüchen hervor.

Zweckmäßigerweise ist der rückwärtige Endabschnitt des Sensors als Befestigungsabschnitt ausgebildet, über den der Sensor so in der Aussparung gehalten ist, dass er, bei entferntem Rohrkörper betrachtet, in stabiler Querposition, das heißt in Querrichtung praktisch unbeweglich, vom Gehäusedeckel wegragt. Man kann somit bei der Montage des Sensors diesen zunächst mit dem Befestigungsabschnitt in der Aussparung des Gehäusedeckels fixieren, um bei der anschließenden Montage des Gehäusedeckels am Rohrkörper gleichzeitig den wegragenden Längenabschnitt des Sensors in den Hohlraum einzuführen.

Besonders vorteilhaft ist es, wenn der rückwärtige Endabschnitt des Sensors als Befestigungsabschnitt ausgebildet ist, der eine Steckmontage des Sensors in der Aussparung ermöglicht. Dabei empfiehlt sich eine Ausgestaltung der Steckverbindungsmittel in einer Weise, dass die Steckrichtung mit der Längsrichtung des Linearantriebes zusammenfällt.

Die Steckverbindungsmittel können beispielsweise von am Gehäusedeckel vorgesehenen, in Steckrichtung verlaufenden Vertiefungen der Seitenflächen der Aussparung sowie von in die Vertiefungen eingreifenden seitlichen Vorsprüngen des Sensors gebildet sein. Auch eine umgekehrte Zuordnung der Steckverbindungsmittel wäre hier möglich.

Es ist insbesondere vorgesehen, dass der Sensor mit seinem Befestigungsabschnitt axial unbeweglich zwischen dem Gehäusedeckel und dem Rohrkörper eingespannt ist. Auf diese Weise wird ohne zusätzliche Befestigungsmittel eine exakte, axial unbewegliche Fixierung des Sensors mit Bezug zum Gehäuse des Linearantriebes erhalten. Dies lässt sich beispielsweise dadurch erreichen, dass der Befestigungsabschnitt und die Aussparung in ihren Abmessungen und ihren Gestaltungen derart aufeinander abgestimmt sind, dass der Sensor bei nicht am Rohrkörper montiertem Gehäusedeckel bezüglich diesem geringfügig zum Rohrkörper hin vorsteht, so dass er im montierten Zustand des Gehäusedeckels von der zugewandten Stirnseite des Rohrkörpers beaufschlagt wird.

Zweckmäßigerweise ist die Aussparung, abgesehen von ihrer sich von der Stirnfläche bis zur seitlichen Außenfläche erstreckenden Aussparungsöffnung, geschlossen ausgebildet.

Vorzugsweise bedarf es keiner Fixierung des in den Hohlraum des Hohlkörpers hineinragenden Längenabschnittes des Sensors, so dass also der Sensor ausgehend vom Gehäusedeckel über seine gesamte Länge hinweg zweckmäßigerweise frei schwebend in den Hohlraum des Rohrkörpers hineinragt und abgesehen von seinem rückwärtigen Endabschnitt an keiner Stelle fixiert ist. An dieser Stelle sei auch erwähnt, dass man die axiale Baulänge des in den Hohlraum hineinragenden Längenabschnittes des Sensors zweckmäßigerweise geringer wählt als die Baulänge des Rohrkörpers, wobei es genügt, den Sensor so weit in den Hohlraum hineinragen zu lassen, bis der Bereich abgedeckt oder die Stelle erreicht ist, die detektiert werden soll.

Vorzugsweise erstreckt sich der Hohlraum über die gesamte Baulänge des Rohrkörpers hinweg und mündet zu entgegengesetzten Stirnflächen des Rohrkörpers aus. Sind an beiden Stirnseiten des Rohrkörpers Gehäusedeckel vorgesehen, die eine Aussparung mit zugeordnetem Sensor aufweisen, können somit beide Sensoren von entgegengesetzten Seiten her in ein und denselben Hohlraum eintauchen.

Da der Sensor ohne weiteres so ausgebildet werden kann, dass sein in den Hohlraum hineinragender Längenabschnitt keiner Querabstützung bedarf, sind an die Querschnittskontur des Hohlraumes keine besonderen Anforderungen gestellt und es ist eine praktisch beliebige Gestaltung möglich. Dadurch kann man die Querschnittsform des Hohlraumes an die sonstigen Gegebenheiten des Rohrkörpers anpassen. Es ist auch beispielsweise möglich, den Rohrkörper als Strangpressteil auszubilden, das in seiner Wandung eine Mehrzahl über den Umfang des Aufnahmeraumes verteilter, axial durchgehender Kanäle aufweist, die aus Gründen der Gewichts- und Materialeinsparung vorgesehen sind, wobei einer dieser Kanäle als Hohlraum zur Sensoraufnahme herangezogen wird.

Bevorzugt sind die elektrischen Anschlussmittel des Sensors als Steckmittel-ausgebildet, so dass man eine Verkabelung beliebig austauschen kann. Auch verfügt der Sensor vorzugsweise über eine im wesentlichen L-förmige Gestalt, wobei der längere Schenkel in den Hohlraum des Rohrkörpers hineinragt und der kürzere Schenkel am rückwärtigen Endabschnitt vorgesehen ist und durch den seitwärts orientierten Öffnungsabschnitt der Aussparungsöffnung hindurch nach außen ragt. Dabei sind die elektrischen Anschlussmittel vorzugsweise an dem kürzeren L-Schenkel des Sensors vorgesehen.

Der Sensor kann im Bereich des rückwärtigen Endabschnittes mit Leuchtanzeigemitteln ausgestattet sein, die eine Anzeige des Betriebszustandes des Sensors ermöglichen. In diesem Zusammenhang ist bei einer besonders kostengünstigen Bauform vorgesehen, dass der Sensor ein zumindest im Bereich des rückwärtigen Endabschnittes lichtdurchlässiges Gehäuse aufweist, durch das hindurch die Leuchtsignale der vom Gehäuse umschlossenen Leuchtanzeigemittel von außen her sichtbar sind. Es ist somit gute Sichtbarkeit mit optimalem Schutz der Leuchtanzeigemittel gepaart.

Die erfindungsgemäße Ausgestaltung ist vor allem bei durch Fluidkraft betätigbaren Linearantrieben von Vorteil. Allerdings eignet sich die Erfindung auch zur Realisierung bei Linearantrieben, die mit anderen Energiearten betrieben werden, beispielsweise elektrische Linearantriebe.

Nachfolgend wird die Erfindung anhand der beliegenden Zeichnung näher erläutert. In dieser zeigen:
- Figur 1: eine erste Bauform des erfindungsgemäßen Linearantriebes in einer perspektivischen Darstellung,

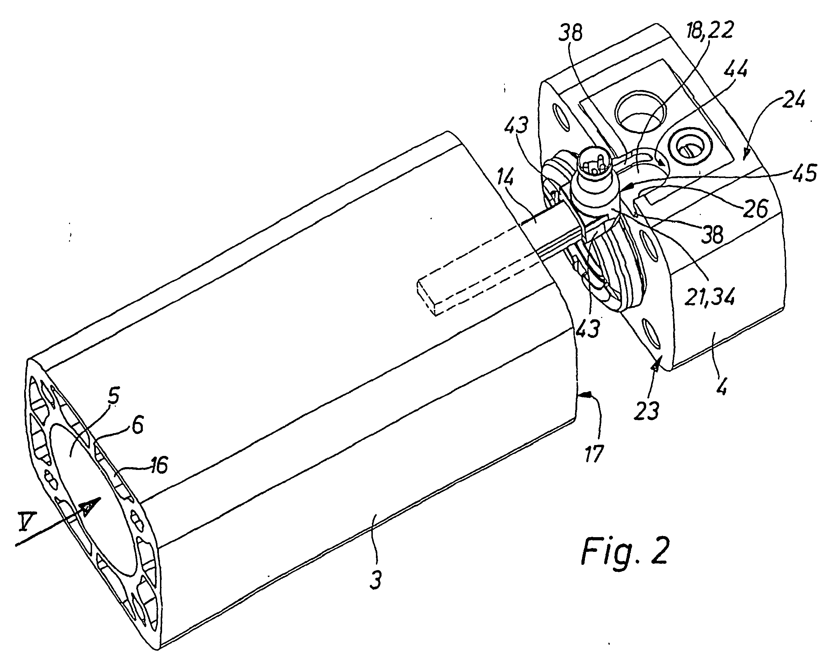

- Figur 2: einen Ausschnitt des Linearantriebes aus Figur 1, der sich auf die Darstellung des Bereiches des Rohrkörpers und eines rückwärtigen Gehäusedeckels beschränkt, wobei die Komponenten in Explosionsdarstellung gezeigt sind,
- Figur 3: den rückwärtigen Gehäusedeckel des Linearantriebes gemäß Figuren 1 und 2 in Einzeldarstellung mit daran fixiertem Sensor,

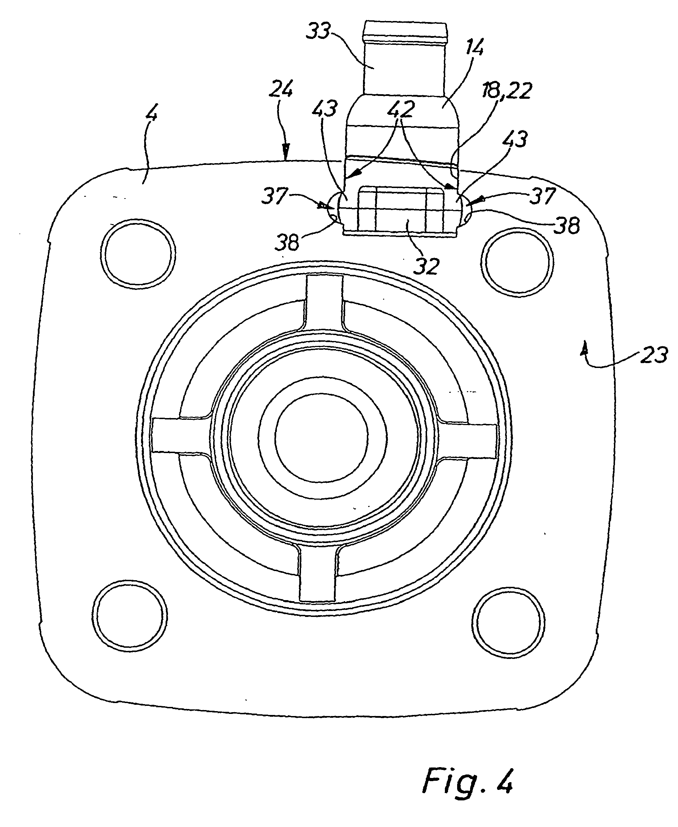

- Figur 4: eine Stirnansicht der Anordnung aus Figur 3 mit Blickrichtung gemäß Pfeil IV, und

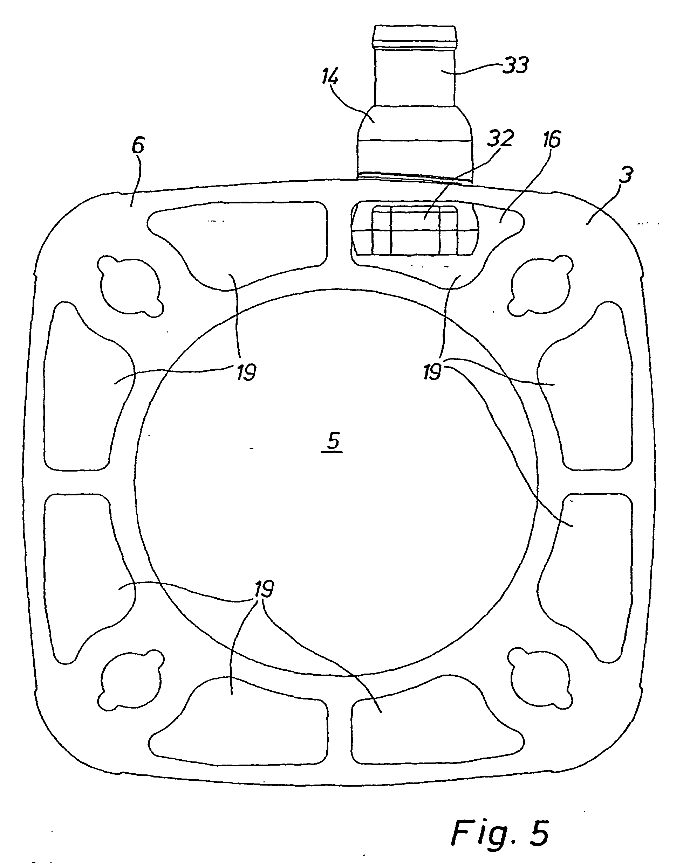

- Figur 5: eine Stirnansicht der Anordnung aus Figur 2 mit Blickrichtung gemäß Pfeil V.

Aus der Zeichnung geht ein durch Fluidkraft betätigbarer Linearantrieb 1 hervor, der ein längliches Gehäuse 2 aufweist, welches einen Rohrkörper 3 sowie an die beiden Stirnseiten des Rohrkörpers 3 fest angesetzte Gehäusedeckel 4 aufweist.

Im Innern des Gehäuses 2 befindet sich ein vorzugsweise zylindrisch konturierter Aufnahmeraum 5, welcher sich in Längsrichtung des Gehäuses 2 erstreckt und der am Außenumfang von der Wandung 6 des Rohrkörpers 3 und stirnseitig von den beiden Gehäusedeckeln 4 begrenzt wird.

In dem Aufnahmeraum 5 befindet sich ein Antriebsteil 7, das bei der fluidbetätigten Bauart des Linearantriebes als Kolben ausgebildet ist und innerhalb des Aufnahmeraumes 5 in Richtung der Gehäuselängsachse 8 bewegbar ist. Das Antriebsteil 7 unterteilt den Aufnahmeraum 5 axial in zwei Arbeitskammern, in die jeweils ein im benachbarten Gehäusedeckel 4 verlaufender Fluidkanal 12 einmündet, über den hinweg der zugeordnete Arbeitskanal nach Bedarf mit fluidischem Druckmedium, beispielsweise Druckluft, gespeist oder entlastet bzw. entlüftet werden kann. Auf diese Weise kann das Antriebsteil 7 zu einer Linearbewegung in Richtung der Gehäuselängsachse 8 veranlasst werden, welche außerhalb des Gehäuses 2 an einem mit dem Antriebsteil 7 in Antriebsverbindung stehenden Abgriffsteil 13 abgegriffen werden kann.

Das Abgriffsteil 13 ist beim Ausführungsbeispiel als Kolbenstange ausgebildet, die den vorderen Gehäusedeckel 4 durchsetzt, wobei sie in diesem vorderen Gehäusedeckel 4 verschiebbar geführt ist, so dass man den entsprechenden Gehäusedeckel 4 als Lagerdeckel bezeichnen kann. Der entgegengesetzte, rückwärtige Gehäusedeckel 4 ist als einfacher Abschlussdeckel ausgebildet.

Bei einer nicht dargestellten alternativen Ausführungsform ist der Linearantrieb in kolbenstangenloser Bauart ausgeführt, so dass beide Gehäusedeckel 4 als Abschlussdeckel fungieren und die Kraftübertragung zwischen Antriebsteil 7 und Abtriebsteil 13 auf andere Weise erfolgt, beispielsweise durch Magnetkraft oder durch einen einen Längsschlitz des Gehäuses 2 durchsetzenden Mitnehmer.

Bei einer weiteren, nicht dargestellten Bauart ist der Linearantrieb als elektrischer Linearantrieb ausgebildet, wobei das Antriebsteil 7 mit elektrischer Energie betätigt wird, beispielsweise durch einen Spindeltrieb.

Der Linearantrieb 1 ist mit einer Positionserfassungseinrichtung ausgestattet, die es ermöglicht, mehrere von dem Antriebsteil 7 mit Bezug zum Gehäuse 2 eingenommene Positionen zu erfassen. Bei den zu erfassenden Positionen handelt es sich beispielsweise um die durch den maximalen Hub des Antriebsteils 7 definierten Endlagen des Antriebsteils 7. In diesem Zusammenhang ist beiden axialen Endbereichen des Gehäuses 2 jeweils ein Sensor 14 zugeordnet, der in berührungsloser Weise auf ein vom Antriebsteil 7 gebildetes oder an diesem vorgesehenes Betätigungselement ansprechen kann, wenn dieses im Rahmen der Linearbewegung des Antriebsteils 7 in die Nähe geeigneter Detektionsmittel 15 des betreffenden Sensors 14 gelangt und insbesondere eine den Detektionsmitteln 15 radial innen gegenüberliegende Position einnimmt.

Das Betätigungselement kann beispielsweise permanentmagnetisch ausgebildet sein und der Sensor 14 einen sogenannten Reed-Schalter bilden, bei dem die Detektionsmittel 15 durch das Magnetfeld des Betätigungselementes betätigt werden.

Die Anordnung und Ausgestaltung der beiden Sensoren 14 ist beim Ausführungsbeispiel identisch, so dass die detaillierte Beschreibung nachfolgend anhand desjenigen Sensors 14 erfolgt, der dem rückwärtigen Gehäusedeckel 4 zugeordnet ist. Die diesbezüglichen Ausführungen gelten entsprechend auch für den am vorderen Gehäusedeckel 4 angeordneten Sensor, wobei zu erwähnen ist, dass der Linearantrieb 1 auch nur an einem Gehäusedeckel mit einem Sensor ausgestattet sein kann und dass jedem Gehäusedeckel gleichzeitig auch mehrere Sensoren zugeordnet sein können.

Dem betreffenden Sensor 14 ist ein in der den Aufnahmeraum 5 umfangsseitig begrenzenden Wandung 6 des Rohrkörpers 3 angeordneter Hohlraum 16 zugeordnet, der vorzugsweise in Längsrichtung des Rohrkörpers 3 verläuft und der umfangsseitig vollständig geschlossen ist. Dieser Hohlraum 16 mündest zu der nachfolgend als erste Stirnfläche 17 bezeichneten Stirnfläche des Rohrkörpers 3 aus, an die der Gehäusedeckel 4 angesetzt ist. Zugunsten einer einfachen Fertigung erstreckt sich der Hohlraum 16 über die gesamte Baulänge des Rohrkörpers 3 und mündet zu dessen entgegengesetzten Stirnflächen aus. Auf diese Weise ist es möglich, den Rohrkörper 3 als Strangpressteil auszubilden, in dessen Wandung 6 ein oder mehrere über den Umfang des Aufnahmeraumes 5 verteilte, axial durchgehende Kanäle 19 verlaufen, von denen einer als Hohlraum 16 verwerden wird.

In axialer Verlängerung des Hohlraumes 6 ist an dem der ersten Stirnfläche 17 zugeordneten Gehäusedeckel 4 eine Aufnahme 18 für den rückwärtigen Endabschnitt 21 des Sensors 14 vorgesehen. Diese Aufnahme 18 ist von einer Aussparung 22 des Gehäusedeckels 4 gebildet, die ähnlich eines Einschnittes im Übergangsbereich zwischen der dem Rohrkörper 3 zugewandten und nachfolgend als zweite Stirnfläche 23 bezeichneten Stirnfläche des Gehäusedeckels 4 und der mit Bezug zur Gehäuselängsachse 8 radial nach außen orientierten seitlichen Außenfläche 24 des Gehäusedeckels 4 platziert ist. Nachdem die zweite Stirnfläche 23 durch eine umlaufende, je nach Ausgestaltung scharfe oder abgerundete Kante 25 in die seitliche Außenfläche 24 übergeht, kann man sagen, dass die Aussparung 22 die Kante 25 durchtrennt und quasi eine über Eck gehende Aussparung 22 vorliegt. Die den Übergang zur zweiten Stirnfläche 23 und zur seitlichen Außenfläche 24 definierende Aussparungsöffnung 26 erstreckt sich somit ausgehend von der dem Rohrkörper 3 zugewandten zweiten Stirnfläche 23 durchgehend bis zur benachbarten seitlichen Außenfläche 24, wobei sie einen zur zweiten Stirnfläche 23 ausmündenden ersten Öffnungsabschnitt 27 und einen zur seitlichen Außenfläche 24 ausmündenden zweiten Öffnungsabschnitt 28 aufweist. Diese Öffnungsabschnitte 27, 28 gehen ohne Unterbrechung ineinander über.

Der Sensor 14 ist ein längliches Bauteil und hat beim Ausführungsbeispiel eine im wesentlichen L-förmige Gestalt. Der Übergangsbereich zwischen dem längeren Schenkel 32 und dem kürzen Schenkel 33 definiert hierbei den rückwärtigen Endabschnitt 21 des Sensors 14. Dieser ist beim Ausführungsbeispiel als Befestigungsabschnitt 34 ausgebildet, über den der Sensor 14 in der Aussparung fixiert ist, wobei er mit seinem längeren Schenkel 32 aus dem ersten Öffnungsabschnitt 27 und mit seinem kürzeren Schenkel 33 aus dem zweiten Öffnungsabschnitt 28 der Aussparung 24 herausragt. Der längere Schenkel 32 erstreckt sich dabei parallel zur Gehäuselängsachse 8 und ragt in den zugeordneten Hohlraum 16 hinein, dessen an der ersten Stirnfläche 17 vorgesehene Mündung mit dem an der zweiten Stirnfläche 23 des Gehäusedeckels 4 vorgesehenen ersten Öffnungsabschnitt 27 der Aussparung 22 fluchtet.

Die schon erwähnten Detektionsmittel 15 befinden sich am längeren Schenkel 32, in den sie zweckmäßigerweise integriert sind. Sie stehen intern mit elektrischen Anschlussmitteln 35 des Sensors in Verbindung, die der elektrischen Kontaktierung dienen und dem seitlichen, zweiten Öffnungsabschnitt 28 der Aussparungsöffnung 26 zugeordnet sind. Beim Ausführungsbeispiel sind die elektrischen Anschlussmittel 35 an dem kürzeren Schenkel 33 vorgesehen und sind zweckmäßigerweise als Steckmittel ausgebildet, die einen lösbaren Anschluss weiterführender elektrischer Leiter, beispielsweise in Kabelform ermöglichen. Denkbar wäre aber auch, elektrische Anschlussmittel in Form abgehender elektrischer Leiter in fest angebrachter Form vorzusehen oder elektrische Anschlussmittel einzusetzen, bei denen es sich um drahtlos arbeitende Signalübertragungsmittel, z.B. auf Infrarot- oder Funkbasis handelt.

Im montierten Zustand sitzt also der Sensor 14 mit seinem rückwärtigen Endabschnitt 21 in der Aussparung 22 ein, von wo aus er in den zugeordneten Hohlraum 16 des Rohrkörpers 3 hineinragt und von wo aus, seitlich abgehend, die elektrische Kontaktierung stattfindet. Ein Entfernen des Sensors 14 ist nur durch Abnehmen des Gehäusedeckels 4 möglich, was unbefugten Zugriff verhindert. Außerdem kann durch die Fixierung des Befestigungsabschnittes 34 in der Aussparung 32 eine unveränderliche exakte Vorgabe der Axialposition des Sensors 14 und somit der an diesem vorgesehenen Detektionsmittel 15 gewährleistet werden. Ohne aufwendiges Justieren kann auf diese Weise im Rahmen des beim Hersteller erfolgenden Zusammenbaus des Linearantriebes 1 eines Positionierung des Sensors 14 vorgenommen werden. Dabei besteht die Möglichkeit, mehrere Sensoren zur Verfügung zu stellen, die sich in ihrer axialen Baulänge bzw. in der Axialposition der Detektionsmittel 15 voneinander unterscheiden, so dass nach Kundenwunsch ein Sensor eingesetzt werden kann, der genau die interessierende Position des Antriebsteils 7 erfasst. Dabei wäre es auch möglich, die Detektionsmittel 15 so auszubilden, dass sie zur Erfassung mehrerer Positionen geeignet sind.

Bevorzugt ist der Befestigungsabschnitt 34 des Sensors 14 derart an die Formgebung der Aussparung 22 angepasst, dass er im in der Aussparung 22 einsitzenden Zustand auch bei noch nicht am Rohrkörper 3 installiertem Gehäusedeckel 4 in der Aussparung 22 gehalten ist. Dies eröffnet die Möglichkeit, den Sensor 14 am Gehäusedeckel 4 vorzufixieren und bei der anschließenden Montage des Gehäusedeckels 4 automatisch auch den Sensor 14 an Ort und Stelle zu positionieren.

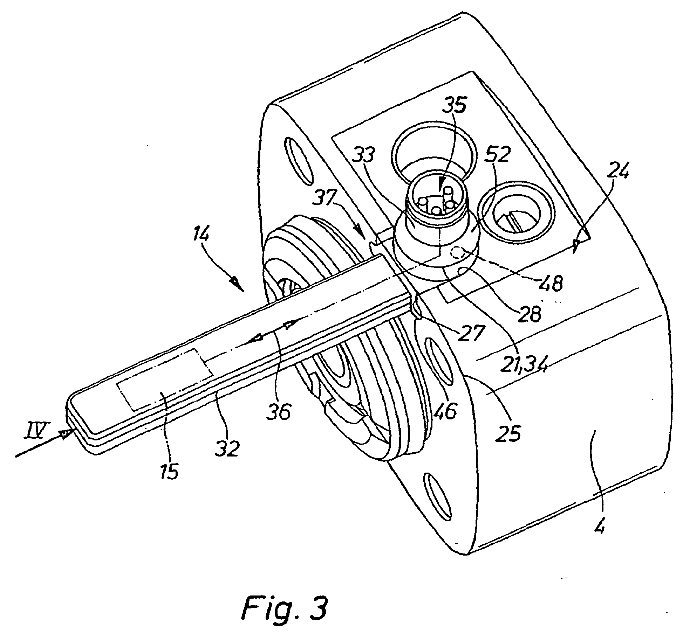

Die Figur 3 zeigt den vom Rohrkörper 3 abgenommenen Gehäusedeckel 4 mit in die Aussparung 22 eingesetztem Sensor 14, wobei letzterer derart in der Aussparung gehalten ist, dass er in stabiler Querposition, also in Querrichtung praktisch unbeweglich, vom Gehäusedeckel 4 wegragt.

Dies hat zur Folge, dass der Sensor 14 bei am Rohrkörper 3 montiertem Gehäusedeckel 4 über seine gesamte, im Hohlkörper befindliche Länge hinweg praktisch freischwebend in den Hohlraum 16 hineinragt und abgesehen vom Befestigungsabschnitt 34 nirgends gehäuseseitig fixiert ist. Auf diese Weise erübrigt sich eine Anpassung der Querschnittskontur des Hohlraumes 16 an diejenige des in den Hohlraum 16 hineinragenden Längenabschnittes des Sensors 14. Einzige Bedingung für die Querschnittsform des Hohlraumes 16 ist, dass diese ein Einführen des Sensors 14 ermöglicht. Man kann auf diese Weise seitens des Rohrkörpers 3 in aller Regel auf ein übliches stranggepresstes Rohrprofil zurückgreifen, wobei man die Querschnittsform des längeren Schenkels 32 des Sensors 14 so ausbildet, dass ein problemloses Einführen in einen der in der Wandung 6 des Rohrkörpers 3 verlaufenden Kanäle 19 möglich ist.

Zweckmäßigerweise ist der Befestigungsabschnitt 34 des Sensors 14 so ausgebildet, dass er im Rahmen einer Steckmontage in der Aussparung 22 fixierbar ist. Die Anordnung wird dabei zweckmäßigerweise so getroffen, dass die in Figur 3 durch Doppelpfeil angedeutete Steckrichtung 36 rechtwinkelig zur zweiten Stirnfläche 23 des Gehäusedeckels 4 ausgebildet ist. Die die Steckverbindung ermöglichenden Steckmittel 37 sind dabei vorzugsweise derart ausgeführt, dass sie dem Sensor 14 lediglich in der Steckrichtung 36 einen Bewegungsfreiheitsgrad belassen, während sämtliche anderen Bewegungsfreiheitsgrade unterdrückt sind. Es ist also insbesondere ausgeschlossen, dass der eingesteckte Befestigungsabschnitt 34 über den zweiten Öffnungsabschnitt 28 der Aussparung 22 hinweg entnommen oder um seine Längsachse verdreht werden kann. Eine derart sichere Fixierung gewährleistet eine präzise Positionierung mit entsprechend genauen Detektionsergebnissen.

Beim Ausführungsbeispiel sind die Steckverbindungsmittel 37 auf Seiten der Aussparung 22 von in Steckrichtung 36 verlaufenden nutartigen Vertiefungen 38 gebildet, die sich an den beiden einander gegenüberliegenden Seitenflächen 42 der Aussparung 22 befinden. Diese Seitenflächen 42 liegen in Ebenen, die rechtwinkelig zur zweiten Stirnfläche 23 verlaufen und zugleich einen Querverlauf bezüglich der seitlichen Außenfläche 24 besitzen. Die Vertiefungen 38 münden zur zweiten Stirnfläche 23 aus und erstrecken sich über etwa die in Steckrichtung 36 gemessene Länge der Aussparung 22.

Die am Befestigungsabschnitt 34 vorgesehenen Steckverbindungsmittel 37 sind von seitlich wegragenden, beispielsweise rippenähnlichen Vorsprüngen 43 gebildet, die sich ebenfalls in Steckrichtung 36 erstrecken, und die beim Einstecken des Sensors 14 formschlüssig in die Vertiefungen 38 eingreifen. Es versteht sich, dass die Anordnung auch umgekehrt sein kann, derart, dass sich die Vorsprünge an der Seitenwand der Aussparung 22 und die Vertiefungen 38 an der Seitenfläche des Befestigungsabschnittes 34 befinden.

Die in Steckrichtung 36 gemessene Einstecktiefe des Befestigungsabschnittes 34 kann durch aufeinander abgestimmte Länge der Steckverbindungsmittel 37 vorgegeben werden. Vorzugsweise erfolgt die Begrenzung der Einstecktiefe jedoch durch die dem ersten Öffnungsabschnitt 27 in Steckrichtung 36 gegenüberliegende rückwärtige Begrenzungsfläche 44 der Aussparung 22, an der der eingesteckte Sensor mit der Rückseite 45 des Befestigungsabschnittes 34 anliegt. In diesem Zusammenhang ist es von Vorteil, wenn die rückwärtige Begrenzungsfläche 44 der Aussparung 22 wie abgebildet eine konkav gewölbte Formgebung hat und die Rückseite 45 des Befestigungsabschnittes 34 hierzu komplementär konvex gestaltet ist.

Der Sensor 14 kann ohne speziell zugeordnete Befestigungsmittel in der gewünschten Position fixiert werden, allein durch das Zusammenwirken mit dem Gehäusedeckel 4 und dem Rohrkörper 3. Hierzu können Formgebung und Baulänge des Befestigungsabschnittes 34 und der Aussparung 22 derart aufeinander abgestimmt sein, dass der Befestigungsabschnitt 34 bei in die Aussparung 22 eingesetztem Zustand und noch nicht am Rohrkörper 3 montiertem Gehäusedeckel 4 geringfügig über die der Aussparung 22 benachbarten Bereiche der zweiten Stirnfläche 23 vorsteht. Die entsprechend vorstehende Partie des Befestigungsabschnittes 34 ist in Figur 3 bei 46 ersichtlich. Wird nun der Gehäusedeckel 4 an den Rohrkörper 3 angesetzt und mit diesem zum Beispiel durch Befestigungsschrauben 47 oder durch andere Befestigungsmittel axial verspannt, erfolgt eine Beaufschlagung der vorstehenden Partie 46 durch die erste Stirnfläche 17 des Rohrkörpers 3. Als Resultat ist der Sensor 14 mit seinem Befestigungsabschnitt 34 axial unbeweglich zwischen dem Gehäusedeckel 4 und dem Rohrkörper 3 eingespannt.

Bei dieser Befestigungsart empfiehlt sich eine Ausgestaltung des Befestigungsabschnittes 34 aus einem Material, das eine gewisse Verformungsfähigkeit hat, beispielsweise Kunststoffmaterial. Außerdem wird das Überstandsmaß der vorstehenden Partie 46 relativ gering gewählt. Auf diese Weise ergibt sich die gewünschte Spannung, wobei gleichzeitig ein flächenbündiger Kontakt der beiden Stirnflächen 17, 23 gewährleistet bleibt.

Die Aussparung 22 ist zweckmäßigerweise abgesehen von ihrer Aussparungsöffnung 26 vollständig geschlossen ausgebildet, so dass insbesondere auch keine Verunreinigungen eintreten können.

Um gewisse Betriebszustände des Sensors 14 visuell sichtbar zu machen, ist der Sensor 14 beim Ausführungsbeispiel im Bereich seines rückwärtigen Endabschnittes 21 mit Leuchtanzeigemitteln 48 ausgestattet, beispielsweise mit einer oder mehreren Leuchtdioden. Diese Leuchtanzeigemittel 48 befinden sich im Innern des Sensors 14 und können an einer nicht näher dargestellten Leiterplatte angeordnet sein, die auch die Detektionsmittel 15 trägt und/oder die mit sonstigen, für den Betrieb des Sensors 14 benötigten elektronischen Bauteilen ausgestattet ist. Um gleichwohl eine gute Sichtbarkeit der Leuchtsignale zu erzielen, besteht das Gehäuse 52 des Sensors 14 zumindest im Bereich des Befestigungsabschnittes 34 und vorzugsweise insgesamt aus einem lichtdurchlässigen Material. Auf diese Weise können sämtliche funktionsrelevanten Bestandteile des Sensors fluiddicht gekapselt untergebracht werden, ohne die Anzeigemöglichkeit zu beschränken.

Beim Ausführungsbeispiel ragen die an den beiden Gehäusedeckeln 4 vorgesehenen Sensoren 14 in unterschiedliche Hohlräume 16 des Gehäuses 2 hinein. Es versteht sich jedoch, dass den Sensoren auch ein gemeinsamer Hohlraum zugeordnet werden kann, wenn dies die Baulänge des in den Hohlraum hineinragenden Sensorabschnittes ohne gegenseitige Kollision zulässt.

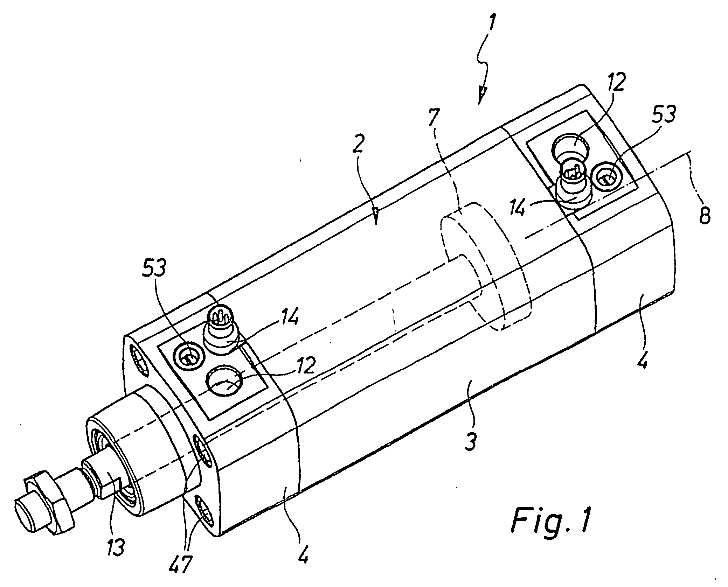

Auch bei relativ geringer Länge der Aussparung 22, gemessen in Richtung der Gehäuselängsachse 8, kann eine sehr zuverlässig Fixierung des Sensors 14 gewährleistet werden. Dies hat zur Folge, dass der Gehäusedeckel 4 sehr kurzbauend ausgeführt werden kann, was kompakte Längenabmessungen des Linearantriebes 1 ermöglicht. Außerdem nehmen die Befestigungsmaßnahmen für den Sensor 14 einen nur sehr geringen Anteil des gesamten Bauvolumens des Gehäusedeckels 4 ein, so dass ausreichend Freiraum zur Installation oder Integration weiterer funktionsrelevanter Komponenten in den Gehäusedeckel 4 zur Verfügung steht. Die Figur 1 zeigt beispielsweise eine in axialer Verlängerung der Aussparung 22 im Gehäusedeckel 4 enthaltene Stellschraube 53 für ein Geschwindigkeitsregulierventil oder für eine pneumatische Endlagendämpfungseinrichtung.

## Patentansprüche

1. Linearantrieb, mit einem Gehäuse (2), das einen einen Aufnahmeraum (5) für ein linear bewegbares Antriebsteil (7) enthaltenden Rohrkörper (3) und einen an einer Stirnseite des Rohrkörpers (3) angesetzten Gehäusedeckel (4) aufweist, mit einem in der Wandung (6) des Rohrkörpers (3) ausgebildeten, umfangsseitig geschlossenen Hohlraum (16), der zu der dem Gehäusedeckel (4) zugewandten Stirnfläche (17) des Rohrkörpers (3) offen ist, und mit mindestens einer in axialer Verlängerung des Hohlraumes (16) am Gehäusedeckel (4) vorgesehenen Aufnahme (18) für den rückwärtigen Endabschnitt (21) eines zur Erfassung mindestens einer Position des Antriebsteils (7) dienenden Sensors (14), der sich ausgehend von der Aufnahme (18) in den Hohlraum (16) des Rohrkörpers (3) hinein erstreckt, **dadurch gekennzeichnet, dass** die Aufnahme (18) von einer Aussparung (22) des Gehäusedeckels (4) gebildet ist, deren Aussparungsöffnung (26) sich ausgehend von der dem Rohrkörper (3) zugewandten Stirnfläche (23) des Gehäusedeckels (4) durchgehend bis zur benachbarten seitlichen Außenfläche (24) des Gehäusedeckels (4) erstreckt, wobei die elektrischen Anschlussmittel (35) des Sensors (14) dem seitlichen Öffnungsabschnitt (28) der Aussparungsöffnung (26) zugeordnet sind.

2. Linearantrieb nach Anspruch 1, **dadurch gekennzeichnet, dass** der rückwärtige Endabschnitt (21) des Sensors (14) als Befestigungsabschnitt (34) ausgebildet ist, über den der Sensor (14) derart in der Aussparung (22) gehalten ist, dass er, bei entferntem Rohrkörper (3) betrachtet, in stabiler Querposition vom Gehäusedeckel (4) wegragt.

3. Linearantrieb nach Anspruch 1 oder 2, **dadurch gekennzeichnet, dass** der rückwärtige Endabschnitt (21) des Sensors (14) als Befestigungsabschnitt (34) ausgebildet ist, über den der Sensor (14) im Rahmen einer Steckmontage in der Aussparung (22) fixiert ist.

4. Linearantrieb nach Anspruch 3, **dadurch gekennzeichnet, dass** der Befestigungsabschnitt (34) und die Aussparung (22) derart mit zusammenwirkenden Steckverbindungsmitteln (37) versehen sind, dass der Sensor (14) über den dem Rohrkörper (3) zugewandten Öffnungsabschnitt (27) der Aussparungsöffnung (26) hinweg in die Aussparung (22) einsteckbar ist und im eingesteckten Zustand quer zur Steckrichtung (36) unbeweglich gehalten ist.

5. Linearantrieb nach Anspruch 2, **dadurch gekennzeichnet, dass** die Steckverbindungsmittel (37) am Gehäusedeckel (4) von in Steckrichtung (36) verlaufenden Vertiefungen (38) der Seitenflächen (42) der Aussparung (22) und am Sensor (14) von in die Vertiefungen (38) eingreifenden seitlichen Vorsprüngen (43) gebildet sind, oder umgekehrt.

6. Linearantrieb nach einem der Ansprüche 3 bis 5, **dadurch gekennzeichnet, dass** der Sensor (14) mit seinem Befestigungsabschnitt (34) axial unbeweglich zwischen dem Gehäusedeckel (4) und dem Rohrkörper (3) eingespannt ist.

7. Linearantrieb nach Anspruch 6, **dadurch gekennzeichnet, dass** der Befestigungsabschnitt (34) des Sensors (14) bei nicht am Rohrkörper (3) montiertem Gehäusedeckel (4) geringfügig über die dem Rohrkörper (3) zugewandte Stirnfläche (23) des Gehäusedeckels (4) vorsteht und im montierten Zustand des Gehäusedeckels (4) von der zugewandten Stirnfläche (17) des Rohrkörpers (3) beaufschlagt wird.

8. Linearantrieb nach einem der Ansprüche 1 bis 7, **dadurch gekennzeichnet, dass** die dem dem Rohrkörper (3) zugewandten Öffnungsabschnitt (27) der Aussparungsöffnung (26) entgegengesetzte rückwärtige Begrenzungsfläche (44) der Aussparung (22) konkav gewölbt ist, wobei der rückwärtige Endabschnitt (21) des Sensors (14) an der zugeordneten Rückseite (45) eine komplementäre konvexe Formgebung aufweist.

9. Linearantrieb nach einem der Ansprüche 1 bis 8, **dadurch gekennzeichnet, dass** die Aussparung abgesehen von ihrer Aussparungsöffnung (26) geschlossen ausgebildet ist.

10. Linearantrieb nach einem der Ansprüche 1 bis 9, **dadurch gekennzeichnet, dass** der Sensor (14) ausgehend vom Gehäusedeckel (4) über seine gesamte im Hohlraum (16) befindliche Länge hinweg freischwebend in den Hohlraum (16) hineinragt und abgesehen von seinem rückwärtigen Endabschnitt (21) an keiner Stelle fixiert ist.

11. Linearantrieb nach einem der Ansprüche 1 bis 10, **dadurch gekennzeichnet, dass** der Hohlraum (16) sich über die gesamte Baulänge des Rohrkörpers (3) erstreckt und zu entgegengesetzten Stirnflächen des Rohrkörpers (3) ausmündet.

12. Linearantrieb nach einem der Ansprüche 1 bis 11, **dadurch gekennzeichnet, dass** der Rohrkörper (3) als Strangpressteil ausgebildet ist und in seiner Wandung eine Mehrzahl über den Umfang des Aufnahmeraumes (5) verteilter, axial durchgehender Kanäle (19) aufweist, von denen einer den Hohlraum (16) bildet.

13. Linearantrieb nach einem der Ansprüche 1 bis 12, **dadurch gekennzeichnet, dass** die elektrischen Anschlussmittel (35) des Sensors (14) als Steckmittel ausgebildet sind.

14. Linearantrieb nach einem der Ansprüche 1 bis 13, **dadurch gekennzeichnet, dass** der Sensor (14) eine im wesentlichen L-förmige Gestalt hat, wobei der längere Schenkel (32) in den Hohlraum (16) hineinragt und der kürzere Schenkel (33) am rückwärtigen Endabschnitt (21) vorgesehen ist und durch den seitwärts orientierten Öffnungsabschnitt ((28) der Aussparungsöffnung (26) hindurch nach außen ragt.

15. Linearantrieb nach Anspruch 14, **dadurch gekennzeichnet, dass** die elektrischen Anschlussmittel (35) an dem kürzeren Schenkel (33) des Sensors (14) vorgesehen sind.

16. Linearantrieb nach einem der Ansprüche 1 bis 15, **dadurch gekennzeichnet, dass** der Sensor (14) über im Bereich des rückwärtigen Endabschnittes (21) platzierte Leuchtanzeigemittel (48) verfügt .

17. Linearantrieb nach Anspruch 16, **dadurch gekennzeichnet, dass** der Sensor (14) ein zumindest im Bereich des rückwärtigen Endabschnittes (21) lichtdurchlässiges Gehäuse (52) aufweist, durch das hindurch die Leuchtsignale der vom Gehäuse (52) umschlossenen Leuchtanzeigemittel (48) von außen her sichtbar sind.

18. Linearantrieb nach einem der Ansprüche 1 bis 17, **gekennzeichnet durch** eine mit Fluidkraft betätigbare Bauart, wobei das Antriebsteil (7) als axial verschiebbarer Kolben ausgebildet ist.

19. Linearantrieb nach einem der Ansprüche 1 bis 18, **dadurch gekennzeichnet, dass** an beiden Stirnseiten des Rohrkörpers (3) ein mit mindestens einer Aussparung (22) für einen Sensor versehener Gehäusedeckel (4) vorgesehen ist.

## Claims

1. Linear drive with a housing (2) comprising a tubular body (3) containing a location chamber (5) for a drive part (7) capable of linear movement and a housing cover (4) fitted to an end face of the tubular body (3), with a circumferentially enclosed cavity (16) formed in the wall (6) of the tubular body (3), which is open towards the end face (17) of the tubular body (3) adjacent to the housing cover (4), and with at least one location (18) provided in axial extension of the cavity (16) on the housing cover (4) for the rear end section (21) of a sensor (14) used for the detection of at least one position of the drive part (7), which extends from the location (18) into the cavity (16) of the tubular body (3), **characterised in that** the location (18) is represented by a recess (22) of the housing cover (4), the recess opening (26) of which continuously extends from the end face (23) of the housing cover (4) which faces the tubular body (3) to the adjacent lateral outer surface (24) of the housing cover (4), the electric connecting means (35) of the sensor (14) being assigned to the lateral opening section (28) of the recess opening (26).

2. Linear drive according to claim 1, **characterised in that** the rear end section (21) of the sensor (14) is designed as a mounting section (34), by means of which the sensor (14) is so retained in the recess (22) that is projects from the housing cover (4) in a stable transverse position if viewed with the tubular body (3) removed.

3. Linear drive according to claim 1 or 2, **characterised in that** the rear end section (21) of the sensor (14) is designed as a mounting section (34), by means of which the sensor (14) is located in the recess (22) by plugging.

4. Linear drive according to claim 3, **characterised in that** the mounting section (34) and the recess (22) are provided with co-operating plug-in means (37), so that the sensor (14) can be inserted into the recess (22) by way of that opening section (27) of the recess opening (26) which is adjacent to the tubular body (3) and is immovable at right angles to the direction of insertion (36) in its inserted state.

5. Linear drive according to claim 2, **characterised in that** the plug-in means (37) on the housing cover (4) are represented by indentations (38) running in the direction of insertion (36) in the side faces (42) of the recess (22) and on the sensor (14) by lateral projections (43) engaging the indentations (38), or vice versa.

6. Linear drive according to any of claims 3 to 5, **characterised in that** the sensor (14) is immovably clamped axially between the housing cover (4) and the tubular body (3) by its mounting section (34).

7. Linear drive according to claim 6, **characterised in that** mounting section (34) of the sensor (14) slightly projects beyond that end face (23) of the housing cover (4) which is adjacent to the tubular body (3) when the housing cover (4) has not yet been fitted to the tubular body (3), and **in that** it is pressurised by the adjacent end face (17) of the tubular body (3) after the housing cover (4) has been fitted.

8. Linear drive according to any of claims 1 to 7, **characterised in that** the rear bounding face (44) of the recess (22) opposite that opening section (27) of the recess opening (26) which is adjacent to the tubular body (3) has a concave curvature, the rear end section (21) of the sensor (14) having a complementary convex shape on the associated back (45).

9. Linear drive according to any of claims 1 to 8, **characterised in that** the recess is enclosed apart from its recess opening (26).

10. Linear drive according to any of claims 1 to 9, **characterised in that** the sensor (14), starting from the housing cover (4), freely projects into the cavity (16) over its entire length within the cavity (16) and is not attached anywhere apart from its rear end section (23).

11. Linear drive according to any of claims 1 to 10, **characterised in that** the cavity (16) extends over the entire length of the tubular body (3) and terminates at opposite end faces of the tubular body (3).

12. Linear drive according to any of claims 1 to 11, **characterised in that** the tubular body (3) is designed as an extruded part with a plurality of axially continuous passages (19) distributed in its wall over the circumference of the location chamber (5), one of which represents the cavity (16).

13. Linear drive according to any of claims 1 to 12, **characterised in that** the electric connecting means (35) of the sensor (14) are designed as plug-in connectors.

14. Linear drive according to any of claims 1 to 13, **characterised in that** the sensor (14) has an essentially L-shaped design, the longer leg (32) projecting into the cavity (16), while the shorter leg (33) is provided at the rear end section (21) and projects outwards through the laterally oriented opening section (28) of the recess opening (26).

15. Linear drive according to claim 14, **characterised in that** the electric connecting means (35) are located on the shorter leg (33) of the sensor (14).

16. Linear drive according to any of claims 1 to 15, **characterised in that** the sensor (14) is provided with illuminated indicating means (48) in the area of its rear end section (21).

17. Linear drive according to claim 16, **characterised in that** the sensor (14) has a housing (52) permeable to light at least in the area of its rear end section (21), through which the light signals of the illuminated indicating means (48) enclosed by the housing (52) can be seen from outside.

18. Linear drive according to any of claims 1 to 17, **characterised by** a fluid-operated design, the drive part (7) being designed as an axially displaceable piston.

19. Linear drive according to any of claims 1 to 18, **characterised in that** a housing cover (4) with at least one recess (22) for a sensor is fitted to both end faces of the tubular body (3).

## Revendications

1. Entraînement linéaire, avec un boîtier (2) qui présente un corps tubulaire (3) contenant un espace de réception (5) pour une partie d'entraînement (7) mobile linéairement et un couvercle de boîtier (4) rapporté sur une face frontale du corps tubulaire (3), avec une cavité (16) formée dans la paroi (6) du corps annulaire (3) et fermée sur le pourtour, cavité qui est ouverte en direction de la face frontale (17) du corps tubulaire (3) tournée vers le couvercle de boîtier (4), et avec au moins un logement (18) prévu dans le prolongement axial de la cavité (16) sur le couvercle de boîtier (4) et destiné à la section d'extrémité arrière (21) d'un capteur (14) servant à relever au moins une position de la partie d'entraînement (7), capteur qui s'étend à l'intérieur de la cavité (16) du corps tubulaire (3) en partant du logement (18), **caractérisé en ce que** le logement (18) est formé par un évidement (22) du couvercle de boîtier (4) dont l'ouverture d'évidement (26) s'étend, à partir de la face frontale (23) du couvercle de boîtier (4) tournée vers le corps tubulaire (3), de manière continue jusqu'à la surface extérieure latérale voisine (24) du couvercle de boîtier (4), les moyens de raccordement électrique (35) du capteur (14) étant associés à la section d'ouverture latérale (28) de l'ouverture d'évidement (26).

2. Entraînement linéaire selon la revendication 1, **caractérisé en ce que** la section d'extrémité arrière (21) du capteur (14) est conformée en section de fixation (34), par l'intermédiaire de laquelle le capteur (14) est maintenu de telle manière dans l'évidement (22) qu'en regardant avec le corps tubulaire (3) supprimé, il dépasse du couvercle de boîtier (4) dans une position transversale stable.

3. Entraînement linéaire selon la revendication 1 ou 2, **caractérisé en ce que** la section d'extrémité arrière (21) du capteur (14) est conformée en section de fixation (34) par l'intermédiaire de laquelle le capteur (14) est fixé dans l'évidement (22) dans le cadre d'un montage par enfichage.

4. Entraînement linéaire selon la revendication 3, **caractérisé en ce que** la section de fixation (34) et l'évidement (22) sont munis de moyens d'enfichage coopérants (37) de telle manière que le capteur (14) peut être enfiché dans l'évidement (22) en passant par-dessus la section d'ouverture (27) de l'ouverture (26) de l'évidement qui est tournée vers le corps tubulaire (3) et, à l'état enfiché, est tenu de manière immobile transversalement à la direction d'enfichage (36).

5. Entraînement linéaire selon la revendication 2, **caractérisé en ce que** les moyens d'enfichage (37) sont formés sur le couvercle de boîtier (4) par des renfoncements (38) des surfaces latérales (42) de l'évidement (22) s'étendant dans la direction d'enfichage (36) et sur le capteur (14) par des saillies latérales (43) s'engageant dans les renfoncements (38), ou inversement.

6. Entraînement linéaire selon l'une des revendications 3 à 5, **caractérisé en ce que** le capteur (14) est serré avec sa section de fixation (34) de manière immobile axialement entre le couvercle de boîtier (4) et le corps tubulaire (3).

7. Entraînement linéaire selon la revendication 6, **caractérisé en ce que**, quand le couvercle de boîtier (4) n'est pas monté sur le corps tubulaire (3), la section de fixation (34) du capteur (14) dépasse légèrement de la face frontale (23) du couvercle de boîtier (4) tournée vers le corps tubulaire (3) et, à l'état monté du couvercle de boîtier (4), est exposée par la face frontale (17) du corps tubulaire (3) en vis-à-vis.

8. Entraînement linéaire selon l'une des revendications 1 à 7, **caractérisé en ce que** la surface limite arrière (44) de l'évidement (22) opposée à la section d'ouverture (27) de l'ouverture d'évidement (26) opposée au corps tubulaire (3) présente une courbure concave, la section d'extrémité arrière (21) du capteur (14) présentant une forme convexe complémentaire sur la face arrière (45) associée.

9. Entraînement linéaire selon l'une des revendications 1 à 8, **caractérisé en ce que** l'évidement est réalisé fermé à l'exception de son ouverture d'évidement (26).

10. Entraînement linéaire selon l'une des revendications 1 à 9, **caractérisé en ce que** le capteur (14) dépasse librement dans la cavité (16) en partant du couvercle de boîtier (4) sur toute sa longueur située dans la cavité (16) et n'est fixé à aucun endroit en dehors de sa section d'extrémité arrière (21).

11. Entraînement linéaire selon l'une des revendications 1 à 10, **caractérisé en ce que** la cavité (16) s'étend sur toute la longueur du corps tubulaire (3) et débouche sur des faces frontales opposées du corps tubulaire (3).

12. Entraînement linéaire selon l'une des revendications 1 à 11, **caractérisé en ce que** le corps tubulaire (3) est conformé en pièce extrudée et présente dans sa paroi une pluralité de canaux (19) continus axialement et répartis sur la circonférence de l'espace de réception (5), dont l'un forme la cavité (16).

13. Entraînement linéaire selon l'une des revendications 1 à 12, **caractérisé en ce que** les moyens de raccordement électrique (35) du capteur (15) sont conformés en moyens à fiche.

14. Entraînement linéaire selon l'une des revendications 1 à 13, **caractérisé en ce que** le capteur (14) a une forme sensiblement en L, la plus longue branche (32) dépassant dans la cavité (16) et la plus courte branche (33) étant prévue sur la section d'extrémité arrière (21) et formant saillie vers l'extérieur à travers la section d'ouverture (28) de l'ouverture d'évidement (26) orientée vers le côté.

15. Entraînement linéaire selon la revendication 14, **caractérisé en ce que** les moyens de raccordement électrique (35) sont prévus sur la plus courte branche (33) du capteur (14).

16. Entraînement linéaire selon l'une des revendications 1 à 15, **caractérisé en ce que** le capteur (14) dispose de moyens d'affichage lumineux (48) placés au niveau de la section d'extrémité arrière (21).

17. Entraînement linéaire selon la revendication 16, **caractérisé en ce que** le capteur (14) présente un boîtier (52) transparent à la lumière au moins au niveau de la section d'extrémité arrière (21), à travers duquel les signaux lumineux des moyens d'affichage lumineux (48) sont visibles à partir de l'extérieur.

18. Entraînement linéaire selon l'une des revendications 1 à 17, **caractérisé par** une construction actionnable par la force d'un fluide, la partie d'entraînement (7) étant conformée en piston mobile axialement.

19. Entraînement linéaire selon l'une des revendications 1 à 18, **caractérisé en ce que** sur les deux faces frontales du corps tubulaire (3), il est prévu un couvercle de boîtier (4) muni d'au moins un évidement (22) pour un capteur.
